(19) Europäisches Patentamt
European Patent Office
Office européen des brevets

(11) Publication number: 0 345 566 A1

# (12) EUROPEAN PATENT APPLICATION

(21) Application number: 89109528.3

(22) Date of filing: 26.05.89

(51) Int. Cl.4: C08K 5/34 , D06M 15/564

(30) Priority: 08.06.88 US 203858

(43) Date of publication of application: 13.12.89 Bulletin 89/50

(84) Designated Contracting States: DE FR GB IT

(71) Applicant: National Starch and Chemical Corporation
10 Finderne Avenue Box 6500
Bridgewater New Jersey 08807(US)

(72) Inventor: Palmer, Joseph G.
9 Mohawk Trail
Westfield New Jersey 07090(US)
Inventor: Iovine, Carmine P.
263 White Oak Ridge Road
Bridgewater New Jersey 08807(US)
Inventor: Walker, James L.
24 Horseshoe Road
Whitehouse Station New Jersey 08889(US)

(74) Representative: Hagemann, Heinrich, Dr. et al
Patentanwälte Hagemann & Kehl Postfach 860329
D-8000 München 86(DE)

## (54) Water soluble formaldehyde-free thermosetting crosslinking agents.

(57) This invention presents a series of water-soluble formaldehyde-free imidazolidinone derivatives useful in non-woven fabric binders. These derivatives can be mixed with aqueous dispersions of hydroxylated copolymers and, when heated, will effectively crosslink these polymers. When used in non-woven fabrics, the crosslinked polymers will impart a desirable degree of strength and structural integrity to the fabric.

EP 0 345 566 A1

## WATER SOLUBLE FORMALDEHYDE-FREE THERMOSETTING CROSSLINKING AGENTS

In the textile industry, non-woven fabrics such as polyesters and polyester blends have become increasingly important for a variety of applications. In such fabrics, a web of polyester (or other fibers) are mixed with an emulsion polymer which is either self-crosslinkable or can be crosslinked by use of a resin. Typically, the crosslinking resin is a thermoset material such as melamine formaldehyde or the emulsion polymer self crosslinks via the methylol groups. In either event, the crosslinking generally involves reactions which release formaldehyde. Because of the inherent problems of the toxicity and potential health effects encountered during exposure to even small amounts of formaldehyde, there exists a real need for alternatives to formaldehyde-based crosslinking systems.

Another problem observed with the use of formaldehyde-based thermoset resins for crosslinking is that such materials can react with groups other than hydroxyl (such as amide or carboxyl) and can even undergo self-condensation. This lack of specificity makes them less desirable for use in textiles, since quality control is difficult to maintain.

Other crosslinking agents, such as glyoxal, which are essentially formaldehyde free can be used to cross-link via hydroxyl groups, but, again, they are largely not specific for any of the functionalities. Further, the reaction between glyoxal and a hydroxyl group forms a hemiacetal, which is hydrolytically unstable.

Additionally, certain functionalized imidazolidinones copolymerized with certain monomers, such as those disclosed in U.S. Pat. No. 4,622,374, have been used as the emulsion polymer. Such copolymers will undergo self-crosslinking during thermal curing, and can be used to form a durable fabric. However, the utility of these materials is limited, as only certain monomers can be utilized in the copolymer formulations,; a large quantity of emulsion polymers are automatically excluded from use.

Further, while imidazolidinones have been known to be useful as permanent press agents for natural fiber (woven) fabrics (see e.g. U.S. Pat. No. 4,619,668) their utility as crosslinking agents for emulsion polymers is unknown.

There exists a real need for a material capable of crosslinking a variety of emulsion polymers which is formaldehyde-free, specific for certain functionalities, and is non-toxic such that it is suitable for use in wearing apparel.

It is an object of this invention to provide a formaldehyde-free crosslinking agent suitable for use as a non-woven fabric binder. It is further an object of this invention to provide a crosslinking agent which is reactive with a variety of polymers used in non-woven fabrics and which is specific for specific funtionalities on these polymers, permitting the crosslinking to proceed in a predictable and desirable manner. It is also an object of this invention to present a crosslinking agent which reacts to crosslink the polymers directly and which does not rely on copolymerization with the monomers to achieve the crosslinking.

This invention presents a series of imidazolidinone derivatives which fulfills these objects. The crosslinking agents comprise imidazolidinones having the following general structure

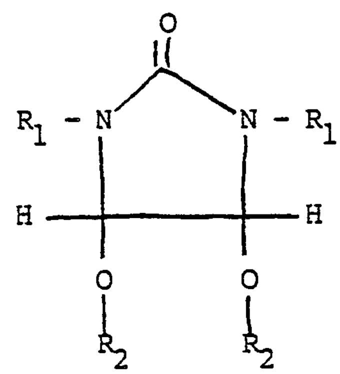

wherein $R_1$ is $C_1$ - $C_6$ straight or branched chain alkyl and $R_2$ is H, a $C_1$ - $C_6$ straight or branched chain alkyl or

$R_3$ - $\overset{O}{\overset{\|}{C}}$ - (wherein $R_3$ is $C_1$-$C_6$ straight or branched chain alkyl) and $R_1$ and $R_2$ may be the same at each position or different.

These materials, when mixed with emulsion or solution polymers used in non-woven textiles, will crosslink these polymers via their hydroxyl (OH) functionalities, therby imparting significant structural integrity and strength to the nonwoven fabric. Thus, the degree of crosslinking is directly proportional to the amount of hydroxyl functionalities; in general, the polymers should contain from 1-10% ( by wt.) of hydroxyl functionalities to achieve a satisfactory amount of crosslinking.

Further, these materials are neither prepared from formaldehyde nor do they generate formaldehyde upon curing. Thus, they can be used in a variety of textile applications where the presence of formaldehyde is undesirable.

In a standard application, the polymeric component is an aqueous emulsion polymer containing from about 1-10% of hydroxyl functionalities. The imidazolidinone is mixed with the polymer preferably in a 1:1 (mole/mole OH) ratio. The system also contains a crosslinking catalyst, and, optionally, a surfactant. For non-woven fabrics, cure is initiated by heating the system to approximately 250 °F (121 °C) for 1-3 min. The resultant fabric has a desirable tensile strength and is suitable for use in a variety of applications.

These crosslinking agents are mixed with polymers used in non-woven fabrics and serve to crosslink these polymers via hydroxyl functionalities. Ideally, the polymers should contain from 1-10% (mole/mole based on polymer), preferably from 2-5%, of hydroxyl functionalities, but it is anticipated that this can vary based on the particular application; however, in general, the degree of crosslinking is directly proportional to the amount of OH present (assuming the crosslinking agent is not limiting), and significantly higher OH amounts will result in a fabric having an undesirable "plastic-like" feel, while significantly lower OH will result in a fabric having an undesirably low tensile strength.

It is also noted that while the crosslinking agents of this invention are most preferably used to crosslink aqueous emulsion polymers, it is anticipated that the agents can be utilized with emulsion polymers having continuous phases other than water and solution polymers wherein the solvent is water or an organic solvent. Indeed, the only requirement for the solvent is its compatibility with the crosslinking agent. As used herein, the term "emulsion" shall be inclusive of "solution". Thus, any reference to "emulsion polymers" shall be inclusive of "solution polymers".

The crosslinking agents of this invention comprise derivatives of imidazolidinone having the following structure:

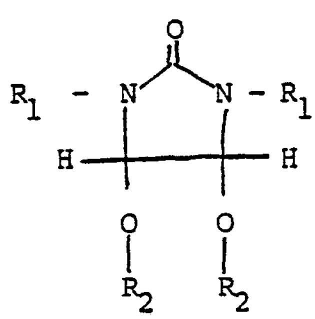

where R, is H or $C_1$ - $C_6$ straight or branched chain alkyl, and $R_2$ is H, $C_1$ - $C_6$ straight or branched chain alkyl or

$R_3$ - $\overset{\overset{O}{\|}}{C}$ - (wherein $R_3$ is $C_1$-$C_6$ straight or branched chain alkyl). Each individual $R_1$ and $R_2$ may be the same at each position or different, thus permitting a wide variety of compositions to be employed.

In a preferred embodiment, the crosslinking agent is 1,3-dimethyl-4,5-dihydroxyimidazolidinone, having the structure

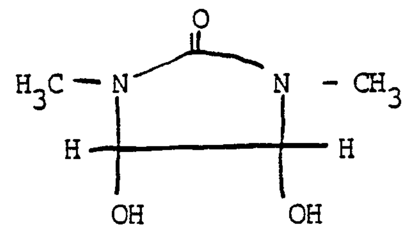

These crosslinking agents can be mixed with emulsion (or solution) polymers containing from 1-10% "preferably from 2-5%"(mole/mole based on polymer) of hydroxyl (OH) functionalities to form a binder dispersion. Preferably, the crosslinking agent is added at a molar concentration equal to that of the OH, but this can be varied from about 0.5 to about 1.5 times (mole/mole) the OH concentration. The dispersion must also contain from 0.25-3% (by weight based on the weight of the crosslinking agent) of a crosslinking catalyst, and, optionally, 0.25-3.0% (by weight based on the weight of the polymer) of a surfactant.

Preferred crosslinking catalysts are acidic species, except for the mineral acids (HCl, $H_3PO_4$, etc), which adversely effect the polymer. In general, most organic acids can be used, although the catalytic activity will vary from one acid to another; for example, citric acid is a highly effective catalyst, while oxalic acid is a less effective catalyst. Most preferably, the catalysts comprise Lewis acids, with zinc nitrate and zinc chloride being the most preferred ones.

The surfactant is added to facilitate fiber wetting and/or rewetting, and will vary as conditions dictate. In general, nonionic surfactants (such a Triton X-100) are useful in most applications, while anionic surfactants are best used when a permanently hydrophilic fabric is desired.

To form a non-woven fabric, a web of polyester fibers (or other desired material) is treated with a sufficient amount of the above-described dispersion to result in a dried binder concentration of 10-50% (by wt.), preferably 25%, in the fabric. The resultant fabric is then dried in an oven or on a heated roller or surface, to remove the water, followed by heating to a temperature in excess of 250 °F (121 °C) to stimulate crosslinking. The resultant fabric has a desirable tensile strength and is suitable in a variety of applications.

Emulsion polymers useful with the crosslinking agents of this invention comprise a large array of materials. In general, so long as the polymer contains a sufficient concentration of hydroxyl functionalities, any copolymeric formulation can be

used. Preferred polymers include, but are not limited to copolymers of hydroxylated monomers such as hydroxyethyl acrylate, hydroxyethyl methacrylate, hydroxypropyl acrylate and hydroxypropyl methacrylate with ester monomers (such as vinyl acetate, butyl acrylate, ethyl acrylate, and methyl methacrylate) and other monomers such as acrylamide, acrylic acid, methacrylic acid, styrene, ethylene, vinyl chloride, and vinylidene chloride. Each of these monomers can be polymerized to form aqueous emulsion (or solution) polymers, and the resultant polymers can, as required, be hydroxylated to the desired degree. In one embodiment, vinyl acetate monomer is copolymerized with the other desired monomers and subsequently hydrolyzed to form a hydroxylated emulsion polymer; in this way the use of hydroxylated monomers can be avoided. The emulsions are preferably prepared at a solids concentration of 30-65% (by weight), and often contain about 1-5% (by weight) of a surfactant such as polyvinyl alcohol to stabilize the emulsion.

Additionally, copolymers of non-hydroxylated monomers can be used, if the polymerization is performed in the presence of a hydroxylated species such as polyvinyl alcohol or starch derivatives such as dextrins, starch, cellulose, etc. In these cases, some hydroxyl species will be grafted into the copolymer. By proper choice of starting conditions, the desired degree of hydroxyl functionalization will be achieved. For polyvinyl alcohol, generally 2-8% (by wt. based on monomer) will result in a usable product.

The following examples illustrate certain preferred embodiments of the invention and are not intended to be illustrative of all embodiments. In these examples, all percentages are in weight % and all temperatures are in °C unless otherwise stated.

## Example 1

This example demonstrates the performance of the formaldehyde-free crosslinking systems of the present invention as binders for polyester nonwovens.

The emulsion polymers comprised hydroxylated monomers of hydroxyethyl acrylate (HEA), hydroxyethyl methacryate (HEMA), and hydroxypropyl acrylate (HPA) copolymerized with various other monomers including vinyl acetate (VAc), butyl acrylate (BA), ethyl acrylate (EA), methyl methacrylate (MMA), acrylamide (AAM), acrylic acid (AA), methacrylic acid (MAA), ethylene (E) and vinylidene chloride ($VCl_2$). Polyvinyl alcohol (88% hydrolyzed) was present as a stabilizer in the ethylene/vinyl acetate polymer emulsions.

The crosslinking agent employed was 1,3-dimethyl-4,5-dihydroxy-imidazolidinone, which was present in the emulsion in a 1:1 mole/mole ratio based on moles of OH. Also present was 0.5% of a zinc nitrate or citric acid catalyst and 0-0.05% of a surfactant. The control experiments were run deleting the crosslinking agent and, optionally, the catalyst and surfactant.

In one experimental series (I), a copolymer of vinyl acetate and ethylene was prepared in the presence of polyvinyl alcohol, which grafts the OH functionalities onto the polymer. This polymer was examined for its utility in non-woven fabric.

In each experimental series, a web of polyester was treated with a sufficient amount of the prepared emulsions (at a solids content of about 8-15%), to yield a dry fabric binder concentration of 25%. The fabric was then dried at 100°C, and crosslinking was achieved by heating the dried fabric to 250°F for 2 minutes.

The wet and dry tensile strength of fabric were then determined by

The results are presented in Table I.

TABLE I

| Binder* | | Treated Polyester | | | | |
|---|---|---|---|---|---|---|
| | | Wet Tensile Strength | | Dry Tensile Strength | | |
| Experimental Series | Polymer Composition (%) | kg./cm. | (lb./in.) | kg./cm. | (lb./in.) | Wet/Dry (%) |
| A | BA/MMA/AAM/HEA (56.7/37.7/0.9/4.7) | 0.214 | (1.20) | 0.286 | (1.60) | 75 |
| | Control (no crosslinker) | 0.118 | (0.66) | 0.286 | (1.60) | 41 |
| B | EA/MMA/AAM/HEA (80.2/14.2/0.9/4.7) | 0.166 | (0.93) | 0.268 | (1.50) | 62 |
| | Control (no crosslinker) | 0.066 | (0.87) | 0.232 | (1.30) | 28 |
| C | BA/S/AAM/HEA (56.7/37.7/0.9/4.7) | 0.268 | (1.50) | 0.304 | (1.70) | 88 |
| | Control (no crosslinker) | 0.136 | (0.76) | 0.268 | (1.50) | 51 |
| D | EA/S/AAM/HEA (80.2/14.2/0.9/4.7) | 0.214 | (1.20) | 0.286 | (1.60) | 75 |
| | Control (no crosslinker) | 0.088 | (0.49) | 0.268 | (1.50) | 33 |
| E | VAC/BA/AAM/HEA (56.7/37.7/0.9/4.7) | 0.121 | (0.68) | 0.179 | (1.00) | 68 |
| | Control (no crosslinker) | 0.068 | (0.38) | 0.170 | (0.95) | 40 |

TABLE I (cont'd)

| Binder* | | Treated Polyester | | | | |
|---|---|---|---|---|---|---|
| | | Wet Tensile Strength | | Dry Tensile Strength | | |
| Experimental Series | Polymer Composition (%) | kg./cm. | (lb./in.) | kg./cm. | (lb./in.) | Wet/Dry (%) |
| F | VAC/BA/AA/HEMA (51.9/42.5/0.9/4.7) | 0.179 | (1.0) | 0.411 | (2.3) | 43 |
| | Control (no crosslinker or catalyst) | 0.121 | (0.68) | 0.375 | (2.1) | 32 |
| G | VAC/E/HEA (71.4/23.8/4.8) | 0.114 | (0.64) | 0.196 | (1.10) | 58 |
| | Control (no crosslinker or catalyst) | 0.041 | (0.23) | 0.179 | (1.00) | 23 |
| H | $VCl_2$/BA/HEA (71.0/24.0/5.0) | 0.168 | (0.94) | 0.179 | (1.00) | 94 |
| | Control (no crosslinker, catalyst, or surfactant) | 0.121 | (0.68) | 0.150 | (0.84) | 81 |
| I | VAC/E prepared in presence of 3.9% PVA** (75/25) | 0.052 | (0.29) | 0.123 | (0.69) | 42 |
| | Control (no crosslinker) | 0.025 | (0.14) | 0.096 | (0.54) | 26 |

*A, B, C, D, E, and G contained 3% of the 4,5-dihydroxy imidazolidinone crosslinker, whereas F contained 2.7%, H contained 1.2%, and I contained 5.0%. A-E contained 0.5% zinc nitrate as the catalyst; F-I contained 0.5% citric acid as the catalyst. A-D contained 0.5% Triton GR-5M as a surfactant; E and F contained 0.4% Triton GR-5M as surfactant; G and I contained 0.4% and 0.2%, respectively, of GAFAC RS-410 as surfactant; H contained no surfactant.

**Mixture of 2.6% Gelvatol 20-30 and 1.3% Gelvatol 20-60 (trade names for 88% hydrolyzed polyvinyl alcohol alcohol sold by Monsanto.

The results show that the use of the crosslinker significantly improved the wet tensile strength of the fabrics, and did not adversely affect the dry strength (which was in some cases slightly improved). The crosslinked fabrics containing the more water-sensitive polyers (A-G and I) showed significant improvements in the wet to dry strength ratios which ranged 42-88% for the crosslinked fabric compared with 23-51% for the control, while the less water-sensitive polymer (H) showed a substantial increase in both wet and dry strengths (from 0.68 to 0.94 and from 0.84 to 1.00 lb./in., respectively).

The results also show that the 4,5-dihydroxyimidazolidinone rather than the catalyst or surfactant is responsible for this improvement, since the controls without the crosslinker showed greatly reduced tensile strengths. They further show that the copolymer prepared in the presence of the hydroxyl-containing stabilizer (I) performed satisfactorily. Thus, the imidazolidinone crosslinking agents are quite versatile and perform satisfactorily with a variety of systems.

## Example II

This example demonstrates the effect of the crosslinker and catalyst on the % insolubles in dimethyl formamide and the swelling quotient (Q) of the polymers. In each determination, the aqueous binder was prepared as described in Example 1, using various catalysts. Separate portions of the binders were then air dried at ambient temperature or oven dried at 130°C for 5 minutes on a release substrate. Each sample was then examined for swelling quotient and % insolubles in dimethylformamide and swelling quotient (Q) using the following procedure:

For the Q determination, two 1 cm X 1 cm dies were cut from each dried sample assuring that no bubbles were present in any of the dies. Both dies were then placed in a 1 oz. solvent jar which was filled with dimethylformamide, and the jar was left undisturbed at ambient temperature for at least 3 hours (standing for periods of time longer than 3 hr. will not affect the results). Each die was then measured, while remaining in the solvent, and Q was calculated as follows:

$Q = (\bar{a})^3$

where:

$\bar{a} = (a_1 + a_2) / 2$

$a_1$ = "solvent" length/original length (1 cm)

$a_2$ = "solvent" width/original width (1 cm)

Results are reported as the average of the two separate determinations (note, if the solvent sample dissolves or gels, Q cannot be determined, this is generally observed in non-crosslinked systems).

For the % insolubles determination, a 0.5 gm sample of each dried film was placed in 100 ml DMF and refluxed, under a water-cooled condenser, for 2 hours. The system was then permitted to cool to ambient temperature after which it was filtered through Eaton Dikeman $ED_{617}$ grade, qualitative filter paper. Duplicate 10 ml samples of filtrate were taken and evaporated to dryness at 60°C, followed by a 1 hour incubation at 130°C; the weight of the residue was then obtained and % insolubles was calculated as follows:

% insolubles = 100 (1-10 R/F)

where:

R = dried residue weight

F = initial sample weight (0.5 gm)

and 10 is the filtrate sample volume (in ml) Results are reported as the average of the two evaporation trials.

The results are presented in Table II.

TABLE II

| Binder | | | | Air Dried | | 5 min. at 130°C | |
|---|---|---|---|---|---|---|---|
| Experimental Series | Polymer Composition | Crosslinker | Catalyst | Q | % Insolubles | Q | % Insolubles |
| J | BA/Sty/MAA/AAM/AA[a] | 4.5% DMDHEU[b] | 0.5% oxalic acid | Dissolved | 4.3 | 16.2 | 2.7 |
| (control) | (61.0/32.9/4.7/0.9/0.5) | none | none | Dissolved | 0.9 | Dissolved | 2.3 |
| K | BA/Sty/AA/HEA | 2.7% DMDHEU | 0.5% oxalic acid | Dissolved | 8.0 | 7.2 | 78.9 |
| (control) | (61.5/32.9/0.9/4.7) | none | none | Dissolved | 2.8 | >20 | 2.5 |
| L | VAC/BA/AAM (58.8/39.2/2.0) | 2.0% DMDHEU | 0.5% citric acid | Dissolved | 3.1 | Gelled | 2.4 |
| M | VAC/BA/HEA (57.1/38.1/4.8) | 2.7% DMDHEU | 0.5% citric | Gelled | 5.1 | 7.2 | 93.2 |
| N | VAC/BA/HEA | none | none | Gelled | 17.3 | Gelled | 1.2 |
| O | VAC/BA/HEA (57.1/38.1/4.8) | 2.7% DMDHEU | 0.5% citric | Gelled | 5.1 | 7.2 | 93.2 |
| P | VAC/BA/HPA | 2.7% DMDHEU | 0.5% citric acid | Dissolved | 5.7 | 14.4 | 79.5 |
| Q | VAC/BA/HPA (57.1/38.1/4.8) | 2.1% DHEU[c] | 1.0% citric acid | Gelled | 18.4 | 19.0 | 50.3 |

a Sty = styrene, AAM = acrylamide
b DMDMEU = 1,3-dimethyl - 4,5 - dihydroxyimidazolidinone
c DMDEU = 4,5-dihydroxyimidazolidinone

TABLE II (cont'd)

| Binder | | | | Air Dried | | 5 min. at 130°C | |
|---|---|---|---|---|---|---|---|
| Experimental Series | Polymer Composition | Crosslinker | Catalyst | Q | % Insolubles | Q | % Insolubles |
| R | VAC/BA/AA/HEA (51.9/42.5/0.9/4.7) | 2.6% DMDHEU | 0.5% citric acid | Dissolved | 16.6 | 5.2 | 96.2 |
| S | VAC/BA/AA/HEMA (51.9/42.5/0.9/4.7) | 2.6% DMDHEU | 0.5% citric acid | Dissolved | 6.4 | 5.5 | 92.7 |

DMDHEU is 1,3-dimethyl-4,5-dihydroxy-imidazolidinone
DHEU is 4,5-dihydroxy-imidazolidinone

Briefly, these tests are a measure of the reactivity of the system with the crosslinker. Reactive systems will exhibit increased insolubility in DMF and decreased swelling quotient (Q) after crosslinking. Since crosslinking occurs at 121 °C or above, comparison of the air dried samples with the oven dried samples permits an estimate of reactivity.

Series J and K reveal that a hydroxylated polymer (K) is quite reactive with the crosslinker (exhibiting a decrease in Q and a large increase in % insol.), while a similar carboxylated polymer (J) is unreactive. Likewise, series L and M demonstrate that the hydroxylated polymer (M), containing HEA is reactive while a similar polymer containing acrylamide (in place of HEA) is not.

Series N and O reveal that the polymer from M exhibits the desirable properties only when the crosslinker is present. Series P and Q demonstrate that DMDHEU and DHEU are both satisfactory crosslinking agents, but that DMDHEU is better. Further, Series N-S collectively reveal that $C_1$-$C_3$ hydroxyacrylates are all reactive with the crosslinker. Thus, the Examples reveal that a wide array of hydroxylated polymers and crosslinkers can be employed in the compositions of this invention.

It is apparent that many modifications and variations of this invention as hereinabove set forth may be made without departing from the spirit and scope thereof. The specific embodiments described are given by way of example only and the invention is limited only by the terms of the appended claims.

## Claims

1. A thermosetting crosslinkable polymeric composition comprising an admixture of

a) from 90-99% (by weight) of an aqueous dispersion of a copolymer which possesses from 1-10% (by weight) of hydroxyl functionalities; and

b) an effective amount of an imidazolinone derivative having the structure

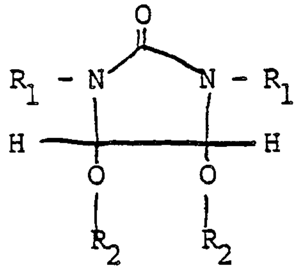

wherein $R_1$ is selected from the group consisting of H and $C_1$-$C_6$ straight and branched chain alkyls and may be the same at each position or different; and $R_2$ is selected from the group consisting of H, $C_1$-$C_6$ straight and branched chain alkyls, and $R_3-\overset{O}{\overset{\|}{C}}-$, wherein $R_3$ is selected from the group consisting of $C_1$-$C_6$ straight and branched chain alkyls, and may be the same at each position or different such that the copolymer is crosslinked when heated.

2. The composition of Claim 1, wherein the copolymer is an aqueous emulsion copolymer selected from the group consisting of copolymers of hydroxyethyl acrylate, hydroxyethylmethacrylate, hydroxypropyl acrylate, or hydroxypropylmethacrylate and at least one monomer selected from the group consisting of vinyl acetate, butyl acrylate, ethyl acrylate, methyl methacrylate, styrene, ethylene, vinyl chloride and vinylidene chloride.

3. The composition of Claim 1, wherein the amount of imidazolidinone derivative ranges from 0.5 to 1.5 moles of derivative for each mole of hydroxyl in the copolymer.

4. The composition of Claim 1, wherein the copolymer comprises nonhydroxylated monomers polymerized in the presence of an effective amount of a hydroxyl-containing species such that the resultant copolymer possesses from 1-10% (by weight) of hydroxyl functionalities grafted onto the copolymer.

5. The composition of Claim 7, wherein the hydroxyl species is selected from the group consisting of polyvinyl alcohol, starch or starch derivatives, and colloidal cellulose.

6. The composition of Claim 1, wherein the copolymer contains an effective amount of partially hydrolyzed polyvinyl acetate such that the copolymer possesses from 1-10% (by weight) of hydroxyl functionalities.

7. The composition of Claim 1, which further comprises 0.25-3% (by weight based on the weight of the imidazolidinone derivative) of a crosslinking catalyst and 0.25-3% (by weight based on the weight of the imidazolidinone derivative) of a surfactant.

8. The composition of Claim 10, wherein the crosslinking catalyst is selected from the group consisting of Lewis acids, citric acid, and oxalic acid.

9. The composition of Claim 10, wherein the surfactant is a nonionic surfactant.

10. A method for forming a non-woven fabric comprising:

(a) treating a fiber web with the composition of Claim 1 such that the web absorbs from a 10-50% (by weight of the polymer mixture) of the dry composition;

(b) removing the water from the system; and

(c) heating the system to a temperature sufficient to cause the imidazolidinone to crosslink the copolymers.

11. The method of Claim 15, wherein the crosslinking of the copolymer is achieved by heating the system to a temperature in excess of 250°F (121°C).

12. A non-woven fabric formed by the process of Claim 14.

European Patent Office

# EUROPEAN SEARCH REPORT

Application Number

EP 89 10 9528

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 143 175 (HOECHST AG)<br>* Claim 1; page 7, lines 24-30 *<br>----- | 1 | C 08 K 5/34<br>D 06 M 15/564 |
| | | | **TECHNICAL FIELDS SEARCHED (Int. Cl.4)** |
| | | | C 08 K<br>C 08 L |

The present search report has been drawn up for all claims

| Place of search | Date of completion of the search | Examiner |
|---|---|---|
| THE HAGUE | 29-08-1989 | SCHUELER D.H.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)